# EUROPEAN PATENT SPECIFICATION

(11) **EP 3 463 976 B1**
(45) Date of publication and mention of the grant of the patent: **13.05.2020**
(21) Application number: 17728792.7
(22) Date of filing: 30.05.2017
(51) Int. Cl.: B60P 1/00, B60P 3/40

(54) **SELF-PROPELLED MODULE FOR OVERSIZE LOADS**
SELBSTANGETRIEBENES MODUL FÜR ÜBERGROSSE LASTEN
MODULE AUTOMOTEUR POUR CHARGES SURDIMENSIONNÉES

(30) Priority: 31.05.2016 IT UB20163959
(43) Date of publication of application: 10.04.2019
(73) Proprietor: Bettella, Massimo, 35127 Padova (IT)
(72) Inventor: Bettella, Massimo, 35127 Padova (IT)
(74) Representative: Modiano, Micaela Nadia
(86) International application number: PCT/EP2017/063052
(87) International publication number: WO 2017/207578

(56) References cited:
- US-A- 4 611 817
- US-A- 5 379 842
- US-A- 6 050 355
- US-A1- 2005 061 560

## Description

The present invention relates to a self-propelled module for oversize loads. US 5379842 A discloses such a module.

Oversize loads are defined as such because they allow the transport of manufactured items and vehicles that are impossible to divide and therefore must be in any case transported in their entirety, having dimensions, weight and heights that exceed the maximum values set by the Traffic Code.

Among these elements or manufactured items there are also prefabricated structures for buildings, boats, boilers, excavators, agricultural machines, stone blocks, portions of transoceanic pipelines, and the like.

Several mutually very different vehicles are currently known for performing these transports.

A first type of known vehicle comprises transport carriages, with three or four ground resting points, which are wheeled not motorized or are motorized and radio controlled, both with wheels and with tracks.

These carriages have relatively modest dimensions and are very low, i.e., they rise above the ground by a few centimeters: owing to this particularity, these carriages are ill-suited for transports above a certain weight in tons due to the reduced number of points and regions in contact with the ground by means of which the weight can be discharged to the ground.

A second type of known vehicles is constituted by wheeled steerable industrial trailers towed by a tractor.

Although these steerable trailers are capable of bearing loads weighing tens of tons, they have a relatively low number of wheels, i.e., of ground resting points, on which the load stresses are concentrated, to the full disadvantage of the uniform distribution of the load on the entire structure; furthermore, since they have no engine, they must indeed be towed, with all the maneuvering problems which, despite being steerable, may arise from this.

These trailers further have the load resting surface at more than one meter from the ground, with all the disadvantages of balance and stability for the load that can occur.

A third type of known vehicles is constituted by monolithic motorized steerable wheeled vehicles with a person on board (such as a truck), or monolithic radio-controlled wheeled vehicles (such as platform) without a person on board.

These motorized vehicles, in addition to having a resting surface that is very high with respect to the ground, have maneuvering problems, since they can be driven like a truck, with similar problems if the route includes a relatively tight curve or a U-turn.

A fourth type of known vehicles is constituted by motorized multi-axle and therefore wheeled modular systems, which are also particularly high and difficult to maneuver in relatively confined spaces.

Systems are also known which comprise a plurality of tracked modules, which are controlled in a coordinated and synchronized manner by a single central control unit.

By virtue of the tracks, these tracked systems solve only partly the problem of the reduced ground resting regions that is typical of wheeled transport, since even each track comprises a limited number of points for discharging the weight to the ground, i.e., the points where the track is interposed between a meshing wheel or a guiding pulley and the ground.

Furthermore, these tracked module systems are ill-suited to keep the transported body resting on an overall resting surface that is stable, since any minimal hollow causes a difference in height between the resting surface of one module with respect to the resting surfaces of the other modules, with consequent unwanted stresses imposed on the body being transported and overall imbalances of the distributed masses.

The aim of the present invention is to provide a self-propelled module for oversize loads that is capable of obviating the cited drawbacks of means of transport and modular systems of the known type.

Within this aim, an object of the invention is to provide a compact self-propelled module the resting surface of which is low, i.e., close to the ground, and at the same time capable of supporting and moving tens of tons of load.

Another object of the present invention is to provide a self-propelled module that is capable of better distributing on the ground the weight that it supports with respect to vehicles of the known type.

A further object of the present invention is to provide a self-propelled module that is capable of a better steering angle than vehicles and modular systems of the known type.

Another object of the present invention is to provide a self-propelled module which can be composed together with other identical modules so as to form a transportation system that can be adapted to the most disparate requirements of transport, both in terms of weights and in terms of dimensions of the bodies to be transported.

This aim, as well as these and other objects which will become better apparent hereinafter, are achieved by a self-propelled module for oversize loads according to claim 1.

Further characteristics and advantages of the invention will become better apparent from the description of a preferred but not exclusive embodiment of the self-propelled module according to the invention, illustrated by way of nonlimiting example in the accompanying drawings, wherein:
Figure 1 is a view of a transportation system composed of a plurality of self-propelled modules according to the invention;
Figure 2 is a perspective view from below of a self-propelled module according to the invention;
Figure 3 is a perspective view of a part of the self-propelled module according to the invention;
Figure 4 is a perspective view of a ground movement assembly of the self-propelled module according to the invention;
Figure 5 is a perspective view of a detail of a ground movement assembly of the self-propelled module according to the invention;
Figure 6 is a view of the oil-pressure controlled suspension means of the self-propelled module according to the invention;
Figure 7 is an exploded perspective view of the hydraulic circuit of the self-propelled module according to the invention;
Figure 8 is a sectional side view of a component of the hydraulic circuit;
Figure 9 is a perspective view of a part of the means for relative rotation of the bed with respect to the load-bearing frame;
Figure 10 is a schematic sectional side view of the bed on the load-bearing frame;

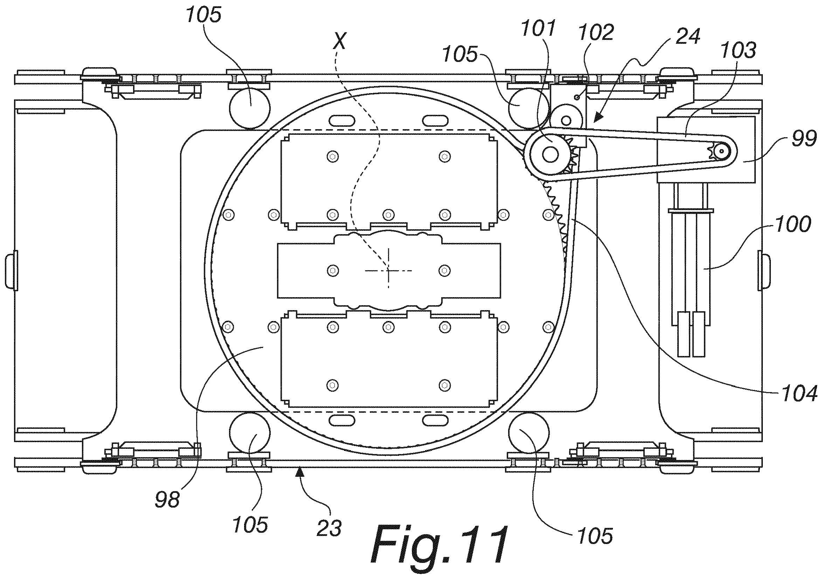

Figure 11 is a schematic plan view of the means for relative rotation of the bed with respect to the load-bearing frame.

With reference to the figures, a self-propelled module for oversize loads according to the invention is designated generally by the reference numeral 10.

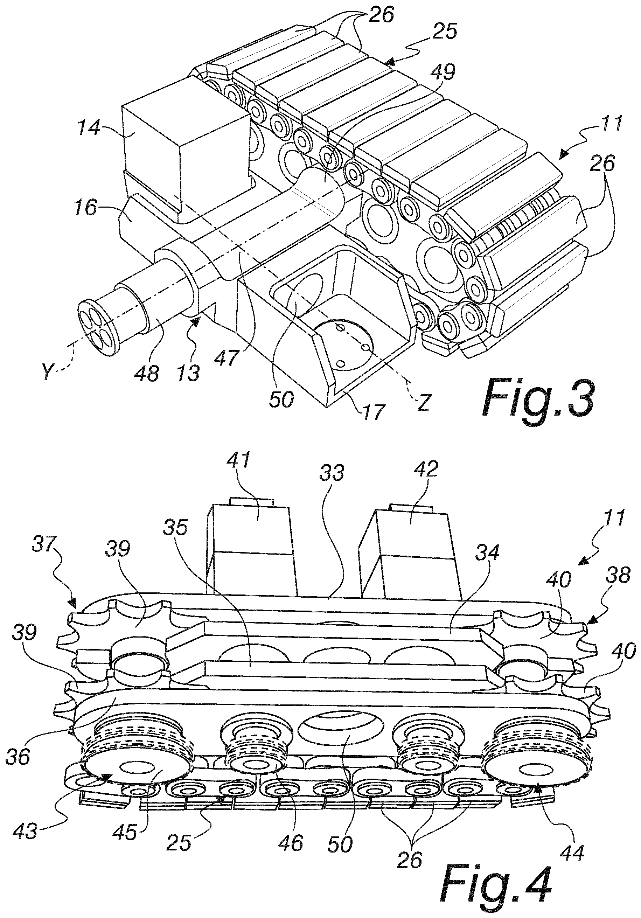

The self-propelled module 10 comprises:
- two ground movement assemblies 11 and 12 with oil-pressure controlled actuation,
- a transverse rocker 13, clearly visible in Figure 3, which is arranged between the movement assemblies 11 and 12, which are coupled thereto independently,
- oil-pressure controlled suspension means 14 and 15, which are arranged on corresponding oscillating supports 16, 17, which are coupled to the transverse rocker 13,
- a load-bearing frame 18, supported by said oil-pressure controlled suspension means 14 and 15, comprising an oil-pressure controlled circuit adapted to serve the ground movement assemblies 11, 12 and the suspension means 14, 15,
- a rotary distribution unit 19, having a vertical axis X, mounted on the load-bearing frame 18, for supplying the ground movement assemblies 11 and 12 and the oil-pressure controlled suspension means 14 and 15; a first part 20 of the rotary distribution unit 19 is fixed to the load-bearing frame 18, while a second part 21 is free to rotate about the vertical axis X with respect to the first part 20,
- a resting bed 22, which is supported by a center bearing 23 that is coaxial to the rotary distribution unit 19,
- below the resting bed 22 there are means 24 for the relative rotation, with respect to the vertical axis X, of the resting bed 22 with respect to the load-bearing frame 18.

The two ground movement assemblies 11 and 12 are each constituted by a tracked shoe, one of which, the movement assembly 11, is clearly visible in Figures 3, 4, 5, the other movement assembly 12 being understood to be identical and symmetrical.

The movement assembly 11, as well as 12, comprises a track 25 that is constituted by a chain of flat elements 26 for resting on the ground, which are arranged side by side and are mutually coupled by means of perforated longitudinal brackets 28 and respective transverse pivots 29.

Each flat element 26 comprises an innermost structural base 30, for example made of a metallic material such as steel and the like, and a resting covering 31, for example made of polymeric material, which is adapted to protect from damage the paving over which it travels.

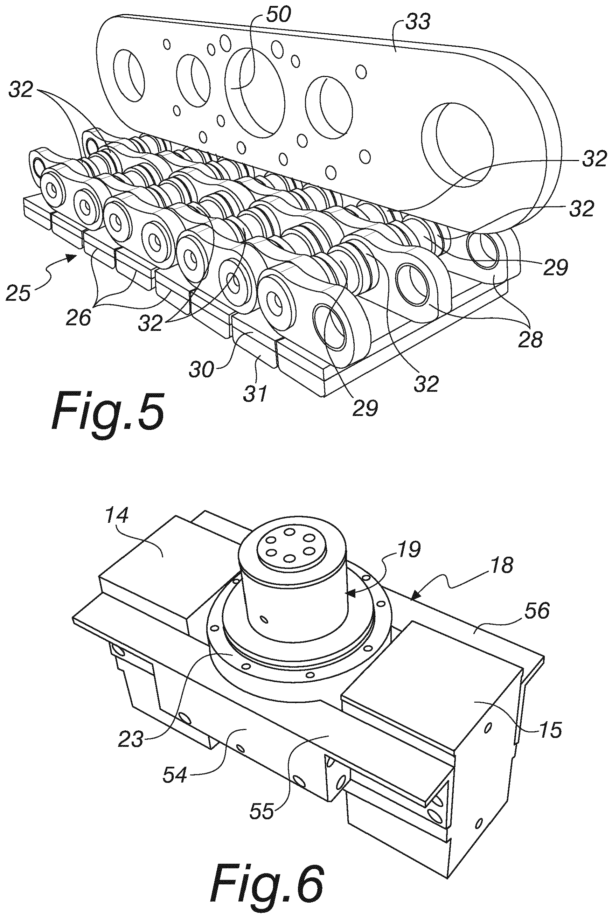

One or more friction reduction devices are fitted on the pivots 29, for example roller bearings 32 adapted to receive by resting one or more gliding plates, for example four gliding plates 33, 34, 35 and 36, as in Figures 4 and 5.

These gliding plates 33, 34, 35 and 36 are thus arranged so that each one slides on a row of roller bearings 32.

The track 25 is moved by two opposite pinions 37 and 38, which are visible in Figure 4 and each of which is constituted, in the present exemplary embodiment, by two pairs of laterally mutually adjacent sprockets 39 and 40, which are adapted to mesh with the pivots 29.

The pinions 37 and 38 in turn are actuated by corresponding oil-pressure controlled motors 41 and 42, which are mounted on a gliding plate, for example on the external gliding plate 33.

The motion is transmitted to the pinions 37 and 38 by means of corresponding transmission devices 43 and 44, for example for example of the type with sprockets 45 and 46, by means of a chain or train of gears or other similar and equivalent devices.

The transverse rocker 13, which is clearly visible in Figure 3, comprises a central body 47, from which two opposite hubs 48 and 49 protrude which are intended for insertion in corresponding central coaxial holes 50 of the gliding plates 33, 34, 35 and 36; the two movement assemblies 11 and 12 can therefore oscillate freely independently about the axis Y of the hubs 48 and 49.

The track 25 is closed so as to surround the gliding plates 33, 34, 35 and 36, and therefore each movement assembly 12 and 13 is rigid and cannot adapt to the underlying ground, compensating with rockers or rollers along the side that rests on the ground; these movement assemblies 12 and 13 are therefore particularly suitable for compact industrial paving, tarmac or concrete roads and less suitable for excessively uneven dirt roads or terrains.

The rocker 13 acts as an articulation point in order to allow the load to be always equally divided between the two movement assemblies 11 and 12.

The oil-pressure controlled suspension means 14 and 15 are constituted by two oil-pressure controlled cylinders, indeed 14 and 15, which act as an oil-pressure controlled suspension and as a lifting unit in order to be able to position vertically the movement assemblies 11 and 12 or compensate for the inclinations of the ground in order to be able to perform movements always with the center of gravity at right angles to the ground.

The oscillating supports 16 and 17 are each constituted by a bracket; the oscillating supports 16 and 17 are coupled to the transverse rocker 13 by means of a longitudinal pivot 50, the axis Z of which is perpendicular to the axis Y of the hubs of the rocker 13 and to the rotation axis X of the rotary distribution unit 19 described hereinafter.

The load-bearing frame 18 is mounted on the oil-pressure controlled cylinders 14 and 15 and only on them.

The load-bearing frame 18, in the present exemplary embodiment, which is obviously non-limiting for the invention, has an H-like plan shape which is formed by a central body 54 and by two opposite side walls 55 and 56.

The central body is provided with a seat 51 for fixing the first part 20 of the rotary distribution unit 19 and there are, between the side walls, two opposite recesses 52 and 53 in which the body of the oil-pressure controlled cylinders 14 and 15 is fixed.

The oil-pressure controlled circuit adapted to serve the ground movement assemblies 11, 12 and the suspension means 14, 15 is constituted by a series of connected holes provided in the central body 54 and in the side walls 55 and 56 of the load-bearing frame 18; in this manner there are no external tubes for the transfer of the oil to the various user devices.

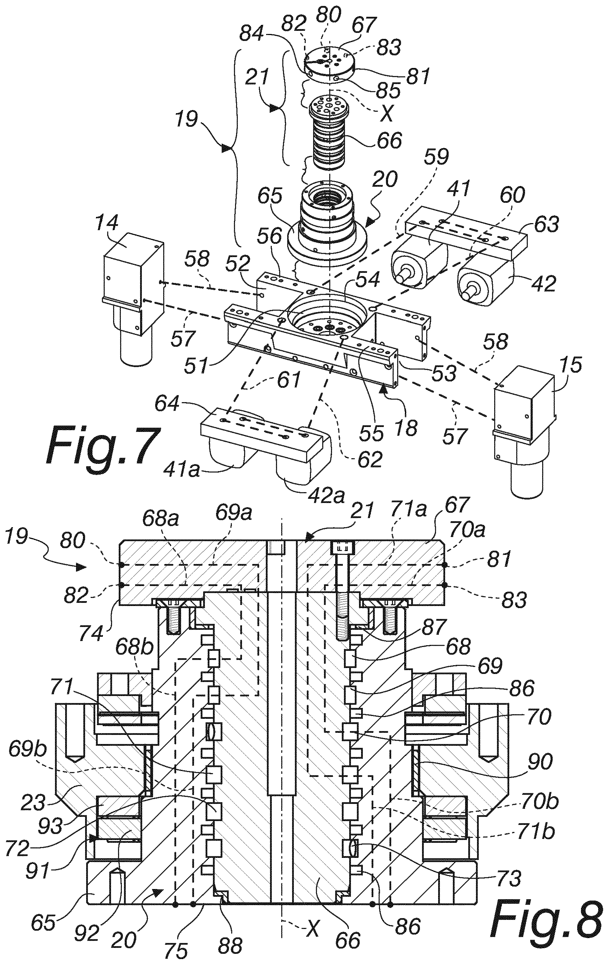

Figure 7 shows schematically the oil-pressure controlled circuit of the load-bearing frame 18.

The following ducts for connection to the rotary distribution unit 19 are provided in the load-bearing duct 18:
- outgoing and return ducts 57 and 58 for the oil toward the oil-pressure controlled cylinders 14 and 15,
- a duct 59 for connection to a first motor 41 of the first movement assembly 11,
- a duct 60 for connection to a second motor 42 of the first movement assembly 11,
- a duct 61 for connection to a first motor 41a of the second movement assembly 12,
- a duct 62 for connection to a second motor 42a of the second movement assembly 12.

Each pair of motors 41, 42 and 41a and 42a is connected to a corresponding manifold 63 and 64 for the distribution of oil to the connected motors.

The rotary distribution unit 19 comprises, as mentioned, a first part 20 which is fixed to the load-bearing frame 18 and a second part 21 which can rotate freely about the vertical axis X with respect to the first part 20.

The first part 20 is constituted by a tubular body, with a flange 65 for fixing to the bottom of the seat 51 of the load-bearing frame 18.

The second part 19 has a cylindrical central body 66, which is contoured to arrange itself in the central hole of the first part 20, and a connection head 67 which is provided with radial holes for connection to an external oil-pressure controlled service system of the module 10.

A number of annular ducts 68, 69, 70, 71, 72, 73 that matches the number of ducts formed on the load-bearing frame 18 is formed between the first part 20 and the cylindrical central body 66.

Each one of the annular ducts 68, 69, 70, 71, 72, 73 is connected and interposed between a corresponding upper duct, which is provided in the second part 21 and is connected to the external oil-pressure controlled service system of the module 10, and a corresponding lower duct, which is provided in the first part 20.

The upper ducts exit onto the lateral face 74 of the connection head 67, while the lower ducts exit onto the lower face 75 of the first part 20.

By way of example, Figure 8 shows schematically in dashes an upper duct 68a and a lower duct 68b for a first annular duct 68, an upper duct 69a and a lower duct 69b for a second annular duct 69, an upper duct 70a and a lower duct 70b for a third annular duct 70, and an upper duct 71a and a lower duct 71b for a fourth annular duct 71.

Each radial connection hole of the connection head 67 is therefore connected to a corresponding user device by means of the rotary distribution unit 19 and the load-bearing frame 18.

For example, a first radial connection hole 80 is designed for the transit of oil of a first motor 41, a second radial hole 81 is designed for the transit of oil of a second motor 42, a third radial hole 82 is designed for the transit of oil of a third motor 41a, a fourth radial hole 83 is designed for the transit of oil for a fourth motor 42a, a fifth radial hole 84 is designed for the transit of oil for the lifting of the oil-pressure controlled cylinders 14 and 15, a sixth radial hole 85 is designed for the transit of oil for the lowering of the oil-pressure controlled cylinders 14 and 15.

Annular slots 86 for corresponding sealing rings are formed between two consecutive annular ducts 68, 69, 70, 71, 72, 73 and above the first duct and below the last duct.

The cylindrical central body 66 of the second part 21 rests on two shoulders of the first part 20 by interposition of friction reduction rings 87 and 88.

The connection head 67 is fixed to the cylindrical central body 66 and rests on the first part 20 by means of a friction reduction ring 89, which is contoured also to prevent the extraction of the cylindrical central body 66 from its seat in the tubular body of the first part 20.

The center bearing 23 is arranged so as to surround the first part 20 of the rotary distribution unit 19 and is supported by the first part 20, as clearly visible in Figure 8.

The center bearing 23 is free to rotate with respect to the first part 20 by interposition of a centering bearing with axial rollers 90 and by resting on a bearing with radial rollers 91, a first lower annular element 92 of which is fixed to the first part 20 while the second upper annular element of which 93 is fixed to the center bearing 23, which rests on it.

The resting bed 22 is extended transversely so as to cover the movement assemblies 11 and 12 and in an anteroposterior direction so that below there is a technical space for fitting structural reinforcement elements and the relative rotation means 24, as described better hereinafter.

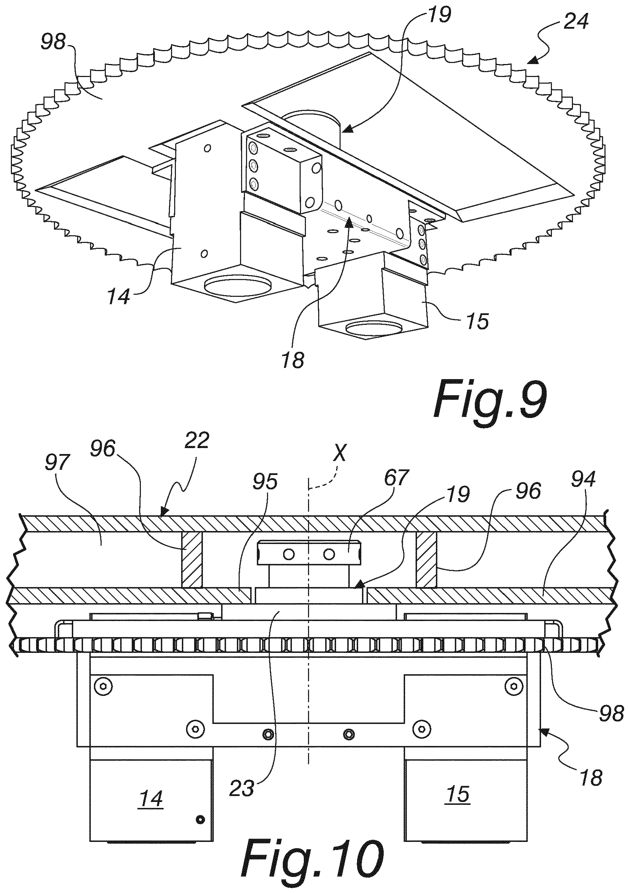

The resting bed 22 is fixed to the center bearing 23 by means of a central contrast plate 94, clearly visible in the schematic sectional view of Figure 10, which is provided centrally with a circular opening the edges 95 of which are fixed to the center bearing 23.

The contrast plate 94 is fixed to the bed 22 by means of stiffening bars 96.

An interspace 97 is formed between the bed 22 and the contrast plate 94 and is adapted to allow the positioning therein of the connection head 67 of the rotary distribution element 19 and the passage of the pipes for connection to the external oil-pressure controlled service system.

The means 24 for relative rotation, with respect to said vertical axis X, of said resting bed 22 with respect to said load-bearing frame 18 comprise, in the constructive example described herein, a steering ring 98 with a rotation axis that coincides with the axis X, fixed to the load-bearing frame 18 and extended so as to lie above the movement assemblies 11 and 12.

The steering ring 98 is turned by means of a gearmotor 99, driven by an electric motor 100, by virtue of the interposition of an intermediate gear 101 that is fitted on a floating tensioning assembly 102.

The rotation is transmitted from the gearmotor 99 to the intermediate gear 101 by means of a first chain 103.

The rotation is transmitted from the intermediate gear 101 to the steering ring 98 by means of a second chain 104 arranged so as to pass also in the floating tensioning assembly 102.

The intermediate gear 101 is obviously constituted by a first upper pinion, which meshes with the first chain 103, and by a second lower pinion, which meshes with the second chain 104.

The electric gearmotor 99 is provided with a positioning encoder which rotates the assembly to a fixed and determined position.

These rotation means 24 allow the load-bearing frame 18 with the movement assemblies 11 and 12 to rotate without any constraint, being able to rotate continuously both in one direction and in the opposite direction, therefore through any angle, even greater than 360°.

The self-propelled module 10 also comprises means for lifting from the ground.

The means for lifting from the ground are constituted for example by four lifting cylinders 105 arranged at the corners of the frame in which the steering ring 98 is inscribed; said cylinders are intended for two purposes:
- to lift the load with a step system by means of a stroke of the suspensions 14 and 15 and a stroke of the cylinders,
- to remove weight from the movement assemblies 11 and 12 when one wishes to steer while stationary in order to avoid spoiling factory flooring.

A self-propelled module 10 according to the invention is designed to be connected structurally and hydraulically to at least two other identical self-propelled modules in order to provide a modular system for oversize loads.

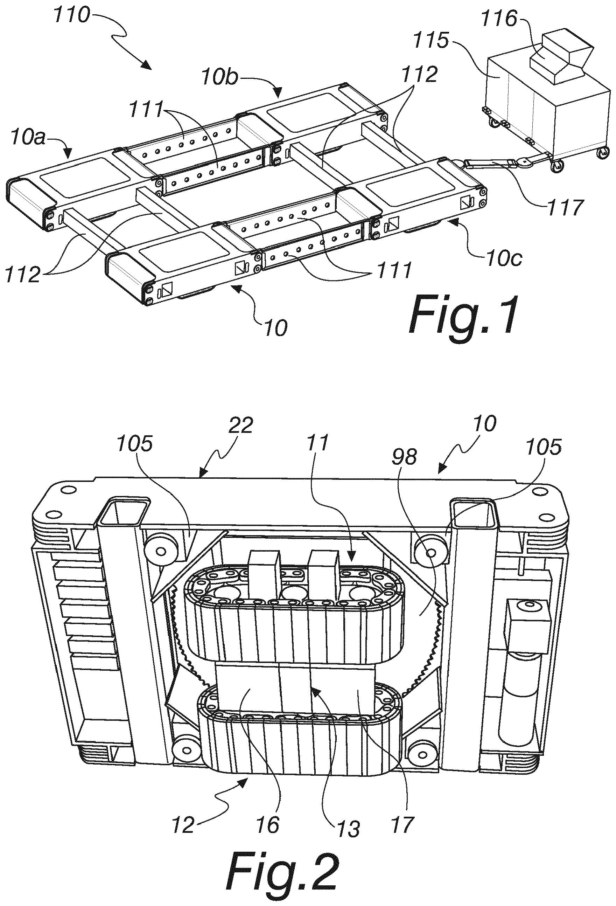

An example of a modular system for oversize loads composed of self-propelled modules according to the invention is exemplified in Figure 1 and is generally designated therein by the reference numeral 110.

In this exemplary embodiment, the modular system 110 comprises four self-propelled modules 10, 10a, 10b, 10c, which are coupled structurally by means of longitudinal members 111 and cross-members 112.

The system is preferably composed of three or four assemblies on which the load rests.

In any case it is possible to also use a single self-propelled module as a traction system to be applied for example to a carriage with wheels.

In order to give stability to the system, the three or four modules are mutually connected in order to provide a perpendicular and parallel arrangement thereof and to keep them upright.

Once the load has been rested on the modules, it is the very rigidity of the object that allows movement, the system does not operate like a truck, which has a bed on which the load rests, but behaves like the trucks of a railcar, in which the railcar itself is rigid (it acts as the load) and the trucks with iron wheels that discharge the weight onto the rail are the two resting elements (self-propelled modules 10).

The described system 110 is based on mutually connected modules, but it is to be understood that a modular system with self-propelled modules according to the invention can work also without rigid connections when multiple modules are fixed safely and stably to a same object to be transported.

Each self-propelled module 10, 10a, 10b, 10c is connected by means of the hydraulic tubes and cables to a wheeled control unit 115, which is managed by means of an industrial PC 116, which is organized to control the module steering and lifting and lowering variables.

The external service hydraulic system is to be understood as being contained within the wheeled control unit 115.

The electrical system for supplying power to the gearmotor 99 and for the operation of the wheeled control unit 115 is supported by the wheeled control unit 115 itself.

The wheeled control unit 115 is structurally connected to at least one self-propelled module 10c by means of an articulated towing arm 117.

The articulated towing arm 117 also bears the cables and tubes for connection to the self-propelled modules.

The electric motor 100 that manages steering is capable of varying the rotation rate, thus allowing a rotation at different angles but in the same times, which is fundamental for achieving the steering geometry of four self-propelled modules arranged in four different points.

The types of steering with this system are substantially infinite.

A modular system for oversize loads composed of self-propelled modules according to the invention is formed:
- by at least three self-propelled modules, if a system is used without using its suspension means 14 and 15,
- by at least four modules, when one uses two of the four modules connected to each other with a hydraulic tube which connects the chambers of the suspension cylinders 14 and 15 of the two modules; in this case, due to the principle of communicating vessels, three resting points are always defined, two real resting points on the two modules the suspensions of which operate in a hydraulically independent manner and a virtual resting point at the center of the two hydraulically connected modules.

A modular system with self-propelled modules according to the invention can be expanded at will to multiples of two modules, which in turn will be connected to others so as to always obtain three suspension points.

A group of hydraulically interconnected modules defines a single suspension point; it is therefore possible to have three groups of "n" modules which form a modular transport system always with three suspension points.

Steering management is electric at low voltage and is controlled by a motor that is managed by a drive with feedback which, by means of the encoder of the electric motor 100 of the gearmotor 99, knows exactly the spatial position of the axis of the self-propelled modules 10.

The industrial computer 116 connected to the system manages the information that arrives from a radio control of the modular system 110.

An operator uses the radio control to steer the self-propelled modules. Steering can be for example of five types and more precisely:
- front steering, of the automotive type;
- rear steering, typically of forklift trucks;
- opposite steering, like a road roller which pivots at the center of the chassis;
- all the modules rotated through a same angle, like a crab,
- carousel, i.e., a fixed position so as to rotate about itself.

First of all it is necessary to tell the industrial PC 116 where the modules 10 are located and how they are positioned.

An adapted user interface allows to choose a preset configuration from a set of "n" possibilities depending on the desired number of modules.

Once the configuration has been selected, it is necessary to tell the PC where the modules are in space in order to allow the system to calculate the exact steering angle for each individual module on the basis of its position and of the set radius of curvature.

This calculation is straightforward and is performed by the PC, which sends the order to each respective steering motor to arrange itself exactly with the required angle and to keep it.

In practice it has been found that the invention achieves the intended aim and objects.

In particular, the invention has provided a compact self-propelled module the resting surface of which is low, i.e., close to the ground, and at the same time capable of supporting and moving tens of tons of load; a self-propelled module 10 according to the invention in fact can be provided with such dimensions that the bed 22 is spaced from the ground by approximately 40 centimeters and the steering ring has a diameter of 1 meter; such a self-propelled module is capable of supporting approximately 40 tons.

Furthermore, the invention provides a self-propelled module that is capable of better distributing the weight that is supported on the ground with respect to vehicles of the known type, by virtue of the movement assemblies constituted by tracked shoes as described above.

Moreover, the invention has provided a self-propelled module that is capable of a better steering angle than modular systems and vehicles of the known type.

As described above, the invention has provided a self-propelled module that can be composed with other identical modules so as to form a modular transportation system that can be adapted to the most disparate requirements of transportation, both in terms of weights and in terms of dimensions of the bodies to be transported.

The invention thus conceived is susceptible of numerous modifications and variations, all of which are within the scope of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A self-propelled module (10) for oversize loads, comprising:
- two ground movement assemblies (11, 12) with oil-pressure controlled actuation,
- a transverse rocker (13) arranged between said movement assemblies (11, 12), which are coupled thereto independently,
**characterised in that** the module comprises:
- oil-pressure controlled suspension means (14, 15), arranged on corresponding oscillating supports (16, 17) coupled to said transverse rocker (13),
- a load-bearing frame (18), supported by said oil-pressure controlled suspension means (14, 15), comprising an oil-pressure controlled circuit adapted to serve said ground movement assemblies (11, 12) and said suspension means (14, 15),
- a rotary distribution unit (19), having a vertical axis (X), mounted on said load-bearing frame (18) for supplying the ground movement assemblies (11, 12) and the oil-pressure controlled suspension means (14, 15), a first part (20) of said rotary distribution unit (19) being fixed to said load-bearing frame (18), a second part (21) being free to rotate about the vertical axis (X) with respect to said first part (20),
- a resting bed (22), which is supported by a center bearing (23) that is coaxial to said rotary distribution unit (19),
- below said resting bed (22) there being means for the relative rotation, about said vertical axis (X), of said resting bed (22) with respect to said load-bearing frame (18).

2. The self-propelled module according to claim 1, **characterized in that** said ground movement assemblies (11, 12) are each constituted by a tracked shoe, which comprises a track (25) constituted by a chain of flat elements (26) for resting on the ground which are arranged side by side and are mutually coupled by means of perforated longitudinal brackets (28) and respective transverse pivots (29).

3. The self-propelled module according to claim 2, **characterized in that** one or more friction reduction devices, for example roller bearings (32), are mounted on said pivots (29) and are adapted to receive by resting contact one or more gliding plates (33, 34, 35, 36) arranged so that each one glides on a row of roller bearings (32).

4. The self-propelled module according to one or more of the preceding claims, **characterized in that** said track (25) is moved by two opposite pinions (37, 38), which in turn are actuated by corresponding oil-pressure controlled motors (41, 42) mounted on a gliding plate (33).

5. The self-propelled module according to one or more of the preceding claims, **characterized in that** said transverse rocker (13) comprises a central body (47) from which two opposite hubs (48, 49) extend which are intended for insertion in corresponding central coaxial holes (50) of the gliding plates (33, 34, 35, 36).

6. The self-propelled module according to one or more of the preceding claims, **characterized in that** said oil-pressure controlled suspension means (14, 15) are constituted by two oil-pressure controlled cylinders (14, 15).

7. The self-propelled module according to one or more of the preceding claims, **characterized in that** said load-bearing frame (18) has an H-like plan shape that is formed by a central body (54) and by two opposite side walls (55, 56), said central body having a seat (51) for the fixing of the first part (20) of the rotary distribution unit (19), two opposite recesses (52, 53) being formed between the side walls, the body of the oil-pressure controlled cylinders (14, 15) being fixed therein.

8. The self-propelled module according to one or more of the preceding claims, **characterized in that** an oil-pressure controlled circuit adapted to serve said ground movement assemblies (11, 12) and said suspension means (14, 15) is constituted by a series of connected holes provided in the central body (54) and in the side walls (55, 56) of the load-bearing frame (18).

9. The self-propelled module according to one or more of the preceding claims, **characterized in that** the following ducts for connection to the rotary distribution unit (19) are provided in said load-bearing frame (18):
- outgoing and return ducts (57, 58) for the oil toward the oil-pressure controlled cylinders (14, 15),
- a duct (59) for connection to a first motor (41) of the first movement assembly (11),
- a duct (60) for connection to a second motor (42) of the first movement assembly (11),
- a duct (61) for connection to a first motor (41a) of the second movement assembly (12),
- a duct (62) for connection to a second motor (42a) of the second movement assembly (12).

10. The self-propelled module according to one or more of the preceding claims, **characterized in that** said first part (20) is constituted by a tubular body, with a flange (65) for fixing to the bottom of the seat (51) of the load-bearing frame (18).

11. The self-propelled module according to one or more of the preceding claims, **characterized in that** said second part (19) has a cylindrical central body (66), which is contoured to arrange itself in the central hole of the first part (20), and a connection head (67) that is provided with radial holes for connection to an external service hydraulic system of the module (10).

12. The self-propelled module according to one or more of the preceding claims, **characterized in that** between the first part (20) and the cylindrical central body (66) there are as many annular ducts (68, 69, 70, 71, 72, 73) as there are ducts formed on the load-bearing frame (18), each one of said annular ducts (68, 69, 70, 71, 72, 73) being connected and interposed between:
- a corresponding upper duct, which is provided in the second part (21) and is connected to the external service hydraulic system of the module (10),
- and a corresponding lower duct provided in the first part (20).

13. The self-propelled module according to one or more of the preceding claims, **characterized in that** said center bearing (23) is arranged so as to surround the first part (20) of the rotary distribution unit (19) and is supported by said first part (20), said center bearing (23) being free to rotate with respect to the first part (20) by virtue of the interposition of a centering bearing with axial rollers (90), and resting on a bearing with radial rollers (91), a first lower annular element (92) of which is fixed to said first part (20) while the second upper annular element (93) is fixed to the center bearing (23) that rests thereon.

14. The self-propelled module according to one or more of the preceding claims, **characterized in that** said resting bed (22) is fixed on the center bearing (23) by means of a central contrast plate (94), which is provided centrally with a circular opening the edges (95) of which are fixed to the center bearing (23).

15. The self-propelled module according to one or more of the preceding claims, **characterized in that** between the bed (22) and the contrast plate (94) there is an interspace (97) that is adapted to allow the placement therein of the connection head (67) of the rotary distribution unit (19) and the passage of the tubes for connection to the external hydraulic service system.

16. The self-propelled module according to one or more of the preceding claims, **characterized in that** said means (24) for relative rotation, with respect to said vertical axis (X), of said resting bed (22) with respect to said load-bearing frame (18) comprise a steering ring (98) with a rotation axis that coincides with the axis (X), fixed to the load-bearing frame (18) and extended so as to lie above the movement units (11, 12), said steering ring (98) being turned by means of a gearmotor (99), which is actuated by an electric motor (100), by interposition of an intermediate gear (101) mounted on a floating assembly (102), for tensioning, the rotation being transmitted from the gearmotor (99) to the intermediate gear (101) by means of a first chain (103), the rotation being transmitted from the intermediate gear (101) to the steering ring (98) by means of a second chain (104) that is arranged to pass also in the floating tensioning assembly (102).

## Patentansprüche

1. Selbstangetriebenes Modul (10) für übergroße Lasten, das aufweist:
- zwei Bodenbewegungsanordnungen (11, 12) mit öldruckgesteuerter Betätigung,
- eine Querschwinge (13), die zwischen den beiden Bewegungsanordnungen (11, 12), die unabhängig daran gekoppelt sind, angeordnet ist,
**dadurch gekennzeichnet, dass** das Modul aufweist:
- öldruckgesteuerte Aufhängungsmittel (14, 15), die an entsprechenden oszillierenden Stützen (16, 17) angeordnet sind, die mit der Querschwinge (13) verbunden sind,
- einen lasttragenden Rahmen (18), der von den öldruckgesteuerten Aufhängungsmitteln (14, 15) gestützt wird und einen öldruckgesteuerten Kreislauf aufweist, der dazu ausgelegt ist, die Bodenbewegungsanordnungen (11, 12) und die Aufhängungsmittel (14, 15) zu versorgen,
- eine drehende Verteilungseinheit (19), die eine vertikale Achse (X) hat und an dem lasttragenden Rahmen (18) angebracht ist, um die Bodenbewegungsanordnungen (11, 12) und die öldruckgesteuerten Aufhängungsmittel (14, 15) zu versorgen, wobei ein erster Teil (20) der drehenden Verteilungseinheit (19) an dem lasttragenden Rahmen (18) befestigt ist und ein zweiter Teil (21) sich bezüglich des ersten Teils (20) frei um die vertikale Achse (X) drehen kann,
- ein Auflagebett (22), das von einem Mittellager (23) gestützt wird, das koaxial zu der drehenden Verteilungseinheit (19) ist,
- wobei sich unter dem Auflagebett (22) Mittel zur relativen Drehung des Auflagebetts (22) bezüglich des lasttragenden Rahmens (18) um die vertikale Achse (X) befinden.

2. Selbstangetriebenes Modul nach Anspruch 1, **dadurch gekennzeichnet, dass** die Bodenbewegungsanordnungen (11, 12) jeweils aus einem Kettenaufspannkörper bestehen, der einen Strang (25) aufweist, der aus einer Kette flacher Elemente (26) zur Auflage auf dem Boden besteht, die nebeneinander angeordnet und mittels perforierter länglicher Halterungen (28) und jeweiliger Querzapfen (29) miteinander verbunden sind.

3. Selbstangetriebenes Modul nach Anspruch 2, **dadurch gekennzeichnet, dass** ein oder mehrere Reibungsreduzierungsvorrichtungen, zum Beispiel Rollenlager (32), an den Zapfen (29) angebracht und dazu ausgelegt sind, eine oder mehrere Gleitplatten (33, 34, 35, 36) durch Auflagekontakt aufzunehmen, die so angeordnet sind, dass jede auf einer Reihe von Rollenlagern (32) gleitet.

4. Selbstangetriebenes Modul nach einem oder mehreren der vorhergehenden Ansprüche, **dadurch gekennzeichnet, dass** der Strang (25) von zwei gegenüberliegenden Antriebsrädern (37, 38) bewegt wird, die wiederum durch entsprechende öldruckgesteuerte Motoren (41, 42), welche auf einer Gleitplatte (33) angebracht sind, betätigt werden.

5. Selbstangetriebenes Modul nach einem oder mehreren der vorhergehenden Ansprüche, **dadurch gekennzeichnet, dass** die Querschwinge (13) einen mittigen Körper (47) aufweist, von dem sich zwei gegenüberliegende Naben (48, 49) erstrecken, die dazu vorgesehen sind, in korrespondierende mittige koaxiale Löcher (50) der Gleitplatten (33, 34, 35, 36) eingeführt zu werden.

6. Selbstangetriebenes Modul nach einem oder mehreren der vorhergehenden Ansprüche, **dadurch gekennzeichnet, dass** die öldruckgesteuerten Aufhängungsmittel (14, 15) aus zwei öldruckgesteuerten Zylindern (14, 15) bestehen.

7. Selbstangetriebenes Modul nach einem oder mehreren der vorhergehenden Ansprüche, **dadurch gekennzeichnet, dass** der lasttragende Rahmen (18) eine H-artige plane Form hat, die aus einem mittigen Körper (54) und aus zwei gegenüberliegenden Seitenwänden (55, 56) gebildet wird, wobei der mittige Körper einen Sitz (51) zum Befestigen des ersten Teils (20) der drehenden Verteilungseinheit (19) hat, wobei zwei gegenüberliegende Ausnehmungen (52, 53) zwischen den Seitenwänden ausgebildet sind, in denen der Körper der öldruckgesteuerten Zylinder (14, 15) befestigt ist.

8. Selbstangetriebenes Modul nach einem oder mehreren der vorhergehenden Ansprüche, **dadurch gekennzeichnet, dass** ein öldruckgesteuerter Kreislauf, der dazu ausgelegt ist, die Bodenbewegungsanordnungen (11, 12) und die Aufhängungsmittel (14, 15) zu versorgen, aus einer Reihe verbundener Löcher besteht, die in dem mittigen Körper (54) und in den Seitenwänden (55, 56) des lasttragenden Rahmens (18) vorgesehen sind.

9. Selbstangetriebenes Modul nach einem oder mehreren der vorhergehenden Ansprüche, **dadurch gekennzeichnet, dass** die folgenden Leitungen zur Verbindung mit der drehenden Verteilungseinheit (19) in dem lasttragenden Rahmen (18) vorgesehen sind:
- abgehende und rückführende Leitungen (57, 58) für das Öl in Richtung der öldruckgesteuerten Zylinder (14, 15),
- eine Leitung (59) zur Verbindung mit einem ersten Motor (41) der ersten Bewegungsanordnung (11),
- eine Leitung (60) zur Verbindung mit einem zweiten Motor (42) der ersten Bewegungsanordnung (11),
- eine Leitung (61) zur Verbindung mit einem ersten Motor (41a) der zweiten Bewegungsanordnung (12),
- eine Leitung (62) zur Verbindung mit einem zweiten Motor (42a) der zweiten Bewegungsanordnung (12).

10. Selbstangetriebenes Modul nach einem oder mehreren der vorhergehenden Ansprüche, **dadurch gekennzeichnet, dass** der erste Teil (20) aus einem rohrförmigen Körper besteht, mit einem Flansch (65) zum Befestigen am Boden des Sitzes (51) des lasttragenden Rahmens (18).

11. Selbstangetriebenes Modul nach einem oder mehreren der vorhergehenden Ansprüche, **dadurch gekennzeichnet, dass** der zweite Teil (19) einen zylindrischen mittigen Körper (66) hat, der dazu konturiert ist, sich in dem mittigen Loch des ersten Teils (20) anzuordnen, und einen Verbindungskopf (67), der mit radialen Löchern zur Verbindung mit einem externen Versorgungshydrauliksystem des Moduls (10) versehen ist.

12. Selbstangetriebenes Modul nach einem oder mehreren der vorhergehenden Ansprüche, **dadurch gekennzeichnet, dass** zwischen dem ersten Teil (20) und dem zylindrischen mittigen Körper (66) so viele ringförmige Leitungen (68, 69, 70, 71, 72, 73) vorhanden sind wie Leitungen an dem lasttragenden Rahmen (18) ausgebildet sind, wobei jede der ringförmigen Leitungen (68, 69, 70, 71, 72, 73) geschaltet und eingefügt ist zwischen
- eine korrespondierende obere Leitung, die in dem zweiten Teil (21) vorgesehen ist und mit dem externen Vesorgungshydrauliksystem des Moduls (10) verbunden ist,
- und eine korrespondierende untere Leitung, die in dem ersten Teil (20) vorgesehen ist.

13. Selbstangetriebenes Modul nach einem oder mehreren der vorhergehenden Ansprüche, **dadurch gekennzeichnet, dass** das Mittellager (23) so angeordnet ist, dass es den ersten Teil (20) der drehenden Verteilungseinheit (19) umgibt und von dem ersten Teil (20) gestützt wird, wobei sich das Mittellager (23) bezüglich des ersten Teils (20) aufgrund der Zwischenschaltung eines Zentrierlagers mit axialen Rollen (90) frei drehen kann, und auf einem Lager mit radialen Rollen (91) aufliegt, von denen ein erstes unteres ringförmiges Element (92) an dem ersten Teil (20) befestigt ist, während das zweite obere ringförmige Element (93) an dem Mittellager (23) befestigt ist, das darauf aufliegt.

14. Selbstangetriebenes Modul nach einem oder mehreren der vorhergehenden Ansprüche, **dadurch gekennzeichnet, dass** das Auflagebett (22) an dem Mittellager (23) mittels einer mittigen Kontrastplatte (94) befestigt ist, die mittig mit einer kreisförmigen Öffnung versehen ist, deren Kanten (95) an dem Mittellager (23) befestigt sind.

15. Selbstangetriebenes Modul nach einem oder mehreren der vorhergehenden Ansprüche, **dadurch gekennzeichnet, dass** sich zwischen dem Bett (22) und der Kontrastplatte (94) ein Zwischenraum (97) befindet, der dazu ausgelegt ist, das Platzieren des Verbindungskopfs (67) der drehenden Verteilungseinheit (19) darin und das Durchtreten der Rohre zur Verbindung mit dem externen Hydraulikversorgungssystem zu ermöglichen.

16. Selbstangetriebenes Modul nach einem oder mehreren der vorhergehenden Ansprüche, **dadurch gekennzeichnet, dass** die Mittel (24) zur relativen Drehung bezüglich der vertikalen Achse (X) des Auflagebetts (22) bezüglich des lasttragenden Rahmens (18) einen Lenkring (98) mit einer Drehachse aufweisen, die mit der Achse (X) zusammenfällt, befestigt an dem lasttragenden Rahmen (18) und erweitert, um über den Bewegungseinheiten (11, 12) zu liegen, wobei der Lenkring (98) mittels eines Getriebemotors (99) gedreht wird, der von einem Elektromotor (100) betätigt wird, durch Zwischenschaltung eines Zwischengetriebes (101), das an einer schwimmenden Anordnung (102) angebracht ist, zum Spannen, wobei die Drehung von dem Getriebemotor (99) mittels einer ersten Kette (103) an das Zwischengetriebe (101) übertragen wird, wobei die Drehung von dem Zwischengetriebe (101) mittels einer zweiten Kette (104), die dazu ausgelegt ist, auch in die schwimmende Spannungsanordnung (102) durchzugehen, an den Lenkring (98) übertragen wird.

## Revendications

1. Module automoteur (10) pour des charges sur-dimensionnées, comportant :
- deux ensembles de mouvement au sol (11, 12) avec un actionnement commandé par pression d'huile,
- une bascule transversale (13) agencée entre lesdits ensembles de mouvement (11, 12), qui sont couplées à celle-ci de manière indépendante,
**caractérisé en ce que** le module comporte :
- des moyens de suspension commandés par pression d'huile (14, 15), agencés sur des supports oscillants (16, 17) correspondants couplés à ladite bascule transversale (13),
- un châssis porteur de charge (18), supporté par lesdits moyens de suspension commandés par pression d'huile (14, 15), comportant un circuit commandé par pression d'huile adapté pour desservir lesdits ensembles de mouvement au sol (11, 12) et lesdits moyens de suspension (14, 15),
- une unité de distribution rotative (19), ayant un axe vertical (X), montée sur ledit châssis porteur de charge (18) pour alimenter les ensembles de mouvement au sol (11, 12) et les moyens de suspension commandés par pression d'huile (14, 15), une première partie (20) de ladite unité de distribution rotative (19) étant fixée audit châssis porteur de charge (18), une seconde partie (21) étant libre de tourner autour de l'axe vertical (X) par rapport à ladite première partie (20),
- un bâti d'appui (22), qui est supporté par un palier central (23) qui est coaxial à ladite unité de distribution rotative (19),
- sous ledit bâti d'appui (22) étant agencés des moyens pour la rotation relative, autour dudit axe vertical (X), dudit bâti d'appui (22) par rapport audit châssis porteur de charge (18).

2. Module automoteur selon la revendication 1, **caractérisé en ce que** lesdits ensembles de mouvement au sol (11, 12) sont chacun constitués d'un sabot à chenille, qui comporte une chenille (25) constituée d'une chaîne d'éléments plats (26) destinés à reposer sur le sol qui sont agencés côte à côte et sont mutuellement couplés au moyen de pattes longitudinales perforées (28) et de pivots transversaux (29) respectifs.

3. Module automoteur selon la revendication 2, **caractérisé en ce qu'**un ou plusieurs dispositifs de réduction de frottement, par exemple des paliers à rouleaux (32), sont montés sur lesdits pivots (29) et sont adaptés pour recevoir par contact d'appui une ou plusieurs plaques de glissement (33, 34, 35, 36) agencées de sorte que chacune glisse sur une rangée de paliers à rouleaux (32).

4. Module automoteur selon une ou plusieurs des revendications précédentes, **caractérisé en ce que** ladite chenille (25) est mise en mouvement par deux pignons opposés (37, 38), qui sont à leur tour actionnés par des moteurs commandés par pression huile (41, 42) correspondants montés sur une plaque de glissement (33).

5. Module automoteur selon une ou plusieurs des revendications précédentes, **caractérisé en ce que** ladite bascule transversale (13) comporte un corps central (47) à partir duquel s'étendent deux moyeux opposés (48, 49) qui sont destinés à une insertion dans des trous coaxiaux centraux (50) correspondants des plaques de glissement (33, 34, 35, 36).

6. Module automoteur selon une ou plusieurs des revendications précédentes, **caractérisé en ce que** lesdits moyens de suspension commandés par pression d'huile (14, 15) sont constitués de deux vérins commandés par pression d'huile (14, 15).

7. Module automoteur selon une ou plusieurs des revendications précédentes, **caractérisé en ce que** ledit châssis porteur de charge (18) a une forme en plan analogue à un H qui est formée par un corps central (54) et par deux parois latérales opposées (55, 56), ledit corps central ayant un logement (51) pour la fixation de la première partie (20) de l'unité de distribution rotative (19), deux évidements opposés (52, 53) étant formés entre les parois latérales, le corps des vérins commandés par pression d'huile (14, 15) étant fixé dans ceux-ci.

8. Module automoteur selon une ou plusieurs des revendications précédentes, **caractérisé en ce qu'**un circuit commandé par pression d'huile adapté pour desservir lesdits ensembles de mouvement au sol (11, 12) et lesdits moyens de suspension (14, 15) est constitué d'une série de trous reliés agencés dans le corps central (54) et dans les parois latérales (55, 56) du châssis porteur de charge (18).

9. Module automoteur selon une ou plusieurs des revendications précédentes, **caractérisé en ce que** les conduites suivantes de raccordement à l'unité de distribution rotative (19) sont agencées dans ledit châssis porteur de charge (18) :
- des conduites de sortie et de retour (57, 58) pour l'huile vers les vérins commandés par pression d'huile (14, 15),
- une conduite (59) de raccordement à un premier moteur (41) du premier ensemble de mouvement (11),
- une conduite (60) de raccordement à un second moteur (42) du premier ensemble de mouvement (11),
- une conduite (61) de raccordement à un premier moteur (41a) du second ensemble de mouvement (12),
- une conduite (62) de raccordement à un second moteur (42a) du second ensemble de mouvement (12).

10. Module automoteur selon une ou plusieurs des revendications précédentes, **caractérisé en ce que** ladite première partie (20) est constituée d'un corps tubulaire, avec une bride (65) pour une fixation au fond du logement (51) du châssis porteur de charge (18).

11. Module automoteur selon une ou plusieurs des revendications précédentes, **caractérisé en ce que** ladite seconde partie (19) a un corps central cylindrique (66), qui est profilé pour s'agencer dans le trou central de la première partie (20), et une tête de raccordement (67) qui est pourvue de trous radiaux pour un raccordement à un système de service hydraulique externe du module (10).

12. Module automoteur selon une ou plusieurs des revendications précédentes, **caractérisé en ce qu'**entre la première partie (20) et le corps central cylindrique (66), il y a autant de conduites annulaires (68, 69, 70, 71, 72, 73) qu'il y a de conduites formées sur le châssis porteur de charge (18), chacune desdites conduites annulaires (68, 69, 70, 71, 72, 73) étant raccordée et intercalée entre :
- une conduite supérieure correspondante, qui est agencée dans la seconde partie (21) et est raccordée au système de service hydraulique externe du module (10),
- et une conduite inférieure correspondante agencée dans la première partie (20).

13. Module automoteur selon une ou plusieurs des revendications précédentes, **caractérisé en ce que** ledit palier central (23) est agencé de manière à entourer la première partie (20) de l'unité de distribution rotative (19) et est supporté par ladite première partie (20), ledit palier central (23) étant libre de tourner par rapport à la première partie (20) du fait de l'interposition d'un palier de centrage avec des rouleaux axiaux (90), et en appui sur un palier avec des rouleaux radiaux (91), dont un premier élément annulaire inférieur (92) est fixé à ladite première partie (20) alors que le second élément annulaire supérieur (93) est fixé au palier central (23) qui est en appui sur celui-ci.

14. Module automoteur selon une ou plusieurs des revendications précédentes, **caractérisé en ce que** ledit bâti d'appui (22) est fixé sur le palier central (23) au moyen d'une plaque d'opposition centrale (94), qui est pourvue centralement d'une ouverture circulaire dont les bords (95) sont fixés au palier central (23).

15. Module automoteur selon une ou plusieurs des revendications précédentes, **caractérisé en ce qu'**entre le bâti (22) et la plaque d'opposition (94) est prévu un espacement (97) qui est adapté pour permettre le placement dans celui-ci de la tête de raccordement (67) de l'unité de distribution rotative (19) et le passage des tubes de raccordement au système de service hydraulique externe.

16. Module automoteur selon une ou plusieurs des revendications précédentes, **caractérisé en ce que** lesdits moyens (24) pour une rotation relative, par rapport audit axe vertical (X), dudit lit d'appui (22) par rapport audit châssis porteur de charge (18) comportent une couronne de direction (98) avec un axe de rotation qui coïncide avec l'axe (X), fixée au châssis porteur de charge (18) et s'étendant de manière à se situer au-dessus des unités de mouvement (11, 12), ladite couronne de direction (98) étant mise en rotation au moyen d'un moteur à engrenages (99), qui est actionné par un moteur électrique (100), par interposition d'un engrenage intermédiaire (101) monté sur un ensemble flottant (102), en vue d'une mise sous tension, la rotation étant transmise du moteur à engrenages (99) à l'engrenage intermédiaire (101) au moyen d'une première chaîne (103), la rotation étant transmise de l'engrenage intermédiaire (101) à la bague de direction (98) au moyen d'une seconde chaîne (104) qui est agencée pour passer également dans l'ensemble de tension flottant (102).
